(19) Europäisches Patentamt
European Patent Office
Office européen des brevets

(11) Veröffentlichungsnummer : **0 104 529**
**B1**

# (12) EUROPÄISCHE PATENTSCHRIFT

(45) Veröffentlichungstag der Patentschrift : **05.03.86**

(21) Anmeldenummer : **83108979.2**

(22) Anmeldetag : **12.09.83**

(51) Int. Cl.⁴ : **C 09 B 26/04**, D 06 P 1/42

## (54) Kationische Farbstoffe, ihre Herstellung und ihre Verwendung zum Färben von synthetischen und natürlichen Materialien.

(30) Priorität : **25.09.82 DE 3235613**

(43) Veröffentlichungstag der Anmeldung : **04.04.84 Patentblatt 84/14**

(45) Bekanntmachung des Hinweises auf die Patenterteilung : **05.03.86 Patentblatt 86/10**

(84) Benannte Vertragsstaaten : **CH DE FR LI**

(56) Entgegenhaltungen :
**DE-B- 1 083 000**
**FR-A- 1 532 806**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Fürstenwerth, Hauke, Dr.**
**Morgengraben 3**
**D-5000 Köln 80 (DE)**

**EP 0 104 529 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft kationische Hydrazonfarbstoffe der allgemeinen Formel

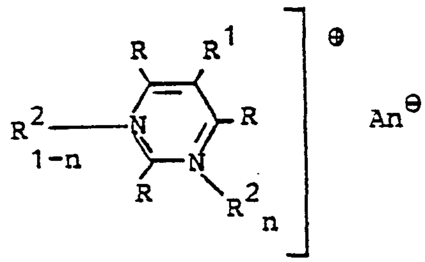

(I)

worin R H, Alkyl, Cycloalkyl, Aralkyl oder Aryl bedeutet, und wobei ein Rest R einem Rest der Formel

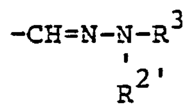

entspricht, worin

$R^1$ Alkyl, Cycloalkyl, Aryl, Aralkyl oder Halogen,

$R^2$ und $R^{2'}$ Alkyl, Alkenyl, Alkinyl oder Aralkyl und

$R^3$ einen substituierten oder ankondensierten Benzol- oder Naphthalinring bedeuten, dessen o-Stellung mit $R^{2'}$ ringgeschlossen sein kann,

n 0 oder 1 und

An⊖ ein Anion bedeuten und

die cyclischen und acyclischen Reste nichtionogene Substituenten und/oder eine Carboxylgruppen enthalten können.

Gegenstand der Erfindung sind außerdem die Herstellung der Farbstoffe I und ihre Verwendung zum Färben und Bedrucken natürlicher und synthetischer Materialien, insbesondere von sauer modifizierten Synthesefasern.

Nichtionogene Substituenten im Sinne der vorliegenden Erfindung sind die in der Farbstoffchemie üblichen nicht dissoziierenden Substituenten, wie z. B. Cyan, Hydroxy, Halogen, wie Fluor, Chlor oder Brom, Nitro, Alkyl, Mono- und Dialkylamino- Phenyl, Alkoxy, Acyloxy, Alkoxycarbonyl, Alkoxycarbonyloxy, wobei Alkyl und Alkoxy vorzugsweise 1-4 C-Atome enthalten und Acyl insbesondere für $C_1$-$C_4$-Alkylcarbonyl steht.

Im Rahmen dieser Erfindung sind Alkylreste beispielsweise solche mit 1-8, insbesondere 1-4 C-Atomen.

Substituenten der Alkylreste R-$R_3$ sind beispielsweise Halogen, Hydroxy, $C_1$-$C_4$-Alkoxy, Phenyloxy, Benzyloxy, $C_1$-$C_4$-Alkoxycarbonyl, Carboxyl, Amidocarbonyl oder Cyan. Halogen steht vorzugsweise für Fluor, Chlor und Brom. Unter Alkenyl- und Alkinylresten werden insbesondere solche mit 2-5 C-Atomen verstanden.

Cycloalkyl steht z. B. für gegebenenfalls durch $C_1$-$C_4$-Alkyl substituiertes Cyclopentyl oder Cyclohexyl. Geeignete Acylreste sind z. B. $C_1$-$C_3$-Alkylcarbonyl, gegebenenfalls durch Halogen oder $C_1$-$C_4$-Alkyl substituiertes Benzoyl, $C_1$-$C_4$-Alkoxycarbonyl, Mono- und Di-$C_1$-$C_4$-alkylaminocarbonyl, Benzylaminocarbonyl, $C_1$-$C_4$-Alkylsulfonyl, Phenylsulfonyl oder Di-$C_1$-$C_4$-alkylaminosulfonyl.

Unter Aryl wird im allgemeinen Phenyl und unter Aralkyl Benzyl und β-Phenyl-$C_2$-$C_4$-alkyl verstanden. A kann außer für Phenyl z. B. auch für Naphthyl stehen. Die Phenyl- und Naphthylringe können durch beispielsweise 1-3 nichtionogene Reste wie Halogen, $C_1$-$C_4$-Alkyl, $C_1$-$C_4$-Alkoxy, $C_1$-$C_4$-Alkoxycarbonyl, Carboxyl, Amidocarbonyl, Cyan, Nitro, Amidosulfonyl, $C_1$-$C_3$-Alkylcarbonylamino, Benzoylamino, Hetaryl oder Arylazo substituiert sein.

Unter Hetaryl wird dabei z. B. gegebenenfalls durch $C_1$-$C_4$-Alkyl oder $C_1$-$C_4$-Alkoxy substituiertes Benzthiazolyl oder 1,2,4-Oxdiazolyl verstanden.

Wenn $R^{2'}$ mit der o-Stellung von $R_3$ verbunden ist, bildet es beispielsweise gemeinsam mit dem Stickstoffatom und $R_3$ einen gegebenenfalls durch 1-4 $C_1$-$C_4$-Alkyl oder $C_1$-$C_4$-Alkoxy substituierten Dihydroindol-, Tetrahydrochinolin-, Tetrahydrochinoxalin- Tetrahydro-1,4-benzoxazin oder Tetrahydro-1,4-benzthiazinring.

Als anionische Reste kommen die für kationische Farbstoffe üblichen organischen und anorganischen Anionen in Betracht.

Bevorzugt sind farblose Anionen.

Das Anion ist im Allgemeinen durch das Herstellungsverfahren und die eventuell vorgenommene

Reinigung des rohen Farbstoffes gegeben. Im allgemeinen liegen die Farbstoffe als Halogenide (insbesondere als Chloride oder Bromide) oder als Methosulfate, Äthosulfate, Sulfate, Benzol- oder Toluolsulfonate oder als Acetate vor. Die Anionen können in bekannter Weise gegen andere Anionen ausgetauscht werden.

Bevorzugte Farbstoffe besitzen die allgemeine Formel

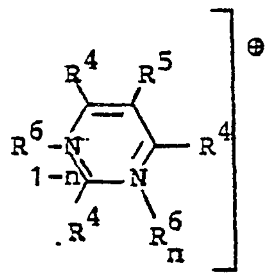 $An^{\ominus}$ (II)

worin $R^4$ Wasserstoff, einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen $C_2$-$C_4$-Alkenylrest, einen gegebenenfalls durch $C_1$-$C_4$-Alkyl substituierten Cyclohexylrest, einen gegebenenfalls durch Halogen, $C_1$-$C_4$-Alkyl oder $C_1$-$C_4$-Alkoxy substituierten Phenyl-, Benzyl- oder Phenylethylrest, bedeutet und wobei ein $R_4$ einen Rest der Formel

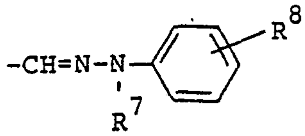

entspricht.

Es bedeuten

$R^5$ Wasserstoff, einen gegebenenfalls durch Hydroxy, Halogen, Cyan, $C_1$-$C_4$-Alkoxy, Carboxyl, Aminocarbonyl- oder $C_1$-$C_4$-Alkoxycarbonyl substituierten $C_1$-$C_8$-Alkylrest, einen $C_2$-$C_4$-Alkenylrest oder einen gegebenenfalls durch Halogen, $C_1$-$C_4$-Alkyl oder $C_1$-$C_4$-Alkoxy substituierten Benzyl-, Phenyl- oder Phenylethylrest, einen gegebenenfalls durch $C_1$-$C_4$-Alkyl substituierten Cyclohexylrest oder Fluor, Chlor oder Brom,

$R^6$, $R^7$ einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen $C_2$-$C_4$-Alkenylrest oder einen gegebenenfalls durch Halogen, $C_1$-$C_4$-Alkyl oder $C_1$-$C_4$-Alkoxy substituierten Benzyl- oder Phenylethylrest,

$R^8$ Wasserstoff, $C_1$-$C_4$-Alkyl, $C_1$-$C_4$-Alkoxy, Halogen, Nitro, Cyan, $C_1$-$C_4$-Alkylsulfonyl, Phenylsulfonyl, Acetylamino, Phenylazo, Benzthiazolyl oder 1,2,4-Oxdiazolyl, wobei die genannten cyclischen Reste durch $C_1$-$C_4$-Alkyl oder Phenyl substituiert sein können, und $R^8$ zum Ring ankondensiert sein kann,

$R^7$ mit der o-Stellung des Benzolringes verbunden sein kann und dann gemeinsam mit dem Benzolring und dem Stickstoffatom einen gegebenenfalls durch $C_1$-$C_4$-Alkyl oder $C_1$-$C_4$-Alkoxy substituierten Dihydroindol-, Tetrahydrochinolin-, Tetrahydrochinoxalin-, Tetrahydro-1,4-benzoxazin- oder Tetrahydro-1,4-benzthiazinring bildet.

n 0 oder 1 und

$An^{\ominus}$ ein Anion bedeuten.

Besonders bevorzugte Farbstoffe besitzen die Formel

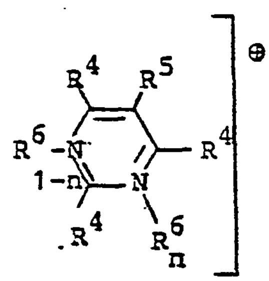 $An^{\ominus}$ (III)

worin $R^4$, $R^5$, $R^6$ und n die in Formel II anegebene Bedeutung haben und ein Rest $R^4$ einen Rest der Formel

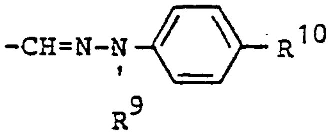

entspricht. Es bedeuten

$R^9$ Alkyl mit 1-4 C-Atomen, 2-Cyanethyl, 2-Carbamoylethyl, 2-Hydroxyethyl oder Benzyl und

$R^{10}$ H, Methyl, Ethyl, $C_1$-$C_4$-Alkoxy, Fluor, Chlor, Brom, Methylsulfonyl, Cyan, Nitro, 6-Methylbenzthiazolyl-2, Acetylamino, Phenylazo, und

$R^{10}$ kann auch mit der o-Stellung des Phenylringes einen Benzdioxinring bilden.

Ebenfalls besonders bevorzugte Farbstoffe besitzen die allgemeine Formel

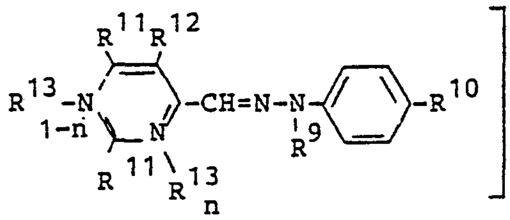

$An^{\ominus}$ (IV)

worin

$R^{11}$, $R^{12}$, H, $CH_3$, $C_2H_5$, $C_3H_7$, $C_4H_9$, $C_2H_4OH$, $CH_2—C_6H_5$, $C_6H_5$ und

$R^{12}$ zusätzlich Fluor, Chlor oder Brom,

$R^{13}$ $CH_3$, $C_2H_5$, $C_2H_4CN$, $C_2H_4OH$, $CH_2—CHOH—CH_3$, $CH_2—C_6H_5$ und

n 0 oder 1 bedeuten und worin $R^9$ und $R^{10}$ die in Formel III angegebene Bedeutung haben.

Die Farbstoffe der Formel I lassen sich herstellen, indem man zunächst Pyrimidinaldehyde der Formel

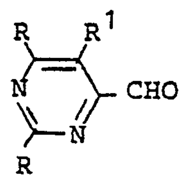

(V)

oder

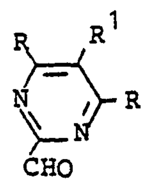

(VI)

mit Arylhydrazinen der Formel

$$R^3—NH—NH_2 \qquad (VII)$$

in Hydrazone der Formel

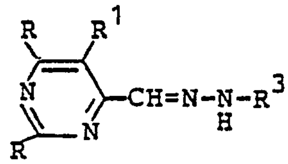

(VIII)

oder

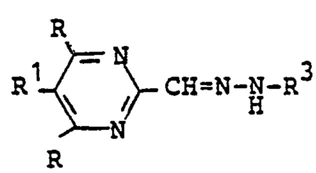

(IX)

umsetzt. Diese Hydrazone lasse sich auf übliche Weise mit Alkylierungsmitteln der allgemeinen Formel

$$R^2—X \qquad (X)$$

in die kationischen Hydrazonfarbstoffe der Formel I überführen.

Die Hydrazone der Formel VIII und IX lassen sich auch herstellen, indem man ein aromatisches Amin der Formel

$$R^3—NH_2 \qquad (XI)$$

diazotiert und auf Pyrimidinderivate der Formel

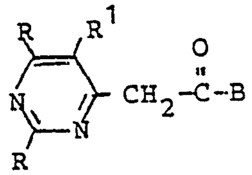

(XII)

oder

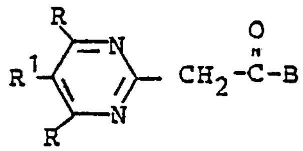

(XIII)

worin B O-Alkyl, O-Aryl, —CO-O-Alkyl oder —CO-O-Aryl bedeutet, kuppelt und diese resultierenden Hydrazone der Formel

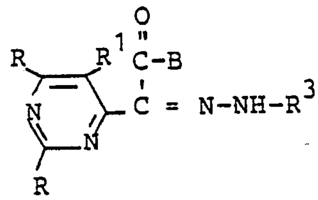

(XIV)

oder

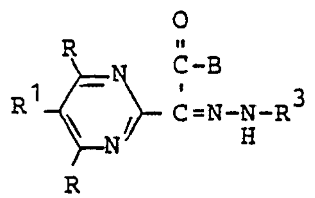

(XV)

mit Alkali oder Säure behandelt.

Die Pyrimidinderivate V, VI, XII und XIII sind literaturbekannt oder lassen sich analog bekannter Verfahren herstellen.

In den Formeln V-XV haben die Reste

R-$R^3$ die in der Formel I angegebene Bedeutung und

X bedeutet eine als Anion abspaltbare Gruppe.

Die verfahrensmäßig erhaltenen Farbstoffe eignen sich hervorragend zum Färben und Bedrucken von kationisch färbbaren Fasern aus Polymerisaten und Mischpolymerisaten des Acrylnitrils und des Dicyanethylens sowie von sauer modifizierten Fasern aus Polyamid und Polyester, wobei echte Farbtöne erhalten werden. Die Farbstoffe können auch Verwendung finden zum Färben und Bedrucken von Cellulosematerialien, z. B. Papier, von Seide und Leder. Sie sind weiter geeignet zur Herstellung von Schreibflüssigkeiten, Stempelwaren, Kugelschreiberpasten und lassen sich auch im Gummidurck verwenden.

Zum Färben mit den basischen Farbstoffen der allgemeinen Formel (I) eignen sich insbesondere Flocken, Fasern, Fäden, Bänder, Gewebe oder Gewirke aus Polyacrylnitril oder aus mindestens 85 % Acrylnitril-Anteil enthaltenden Mischpolymerisaten des Acrylnitrils mit anderen Vinylverbindungen, wie Vinylchlorid, Vinylidenchlorid, Vinylfluorid, Vinylacetat, Vinylpyridin, Vinylimidazol, Vinylalkohol, Acryl- und Methacrylsäureestern und -amiden, as. Dicyanethylen. Ebenso können Flocken, Fasern, Fäden, Bänder, Gewebe oder Gewirke aus sauer modifizierten synthetischen Materialien, insbesondere aus sauer modifizierten aromatischen Polyestern sowie sauer modifizierten Polyamidfasern hervorragend gefärbt werden. Sauer modifizierte aromatische Polyester sind beispielsweise Polykondensationsprodukte aus Sulfoterephthalsäure und Ethylenglykol, d. h. sulfonsäuregruppenhaltigen Polyethylenglykolterephthalaten, wie sie in der belgischen Patentschrift 549 179 und der USA-Patentschrift 2 893 816 beschrieben sind.

Das Färben kann aus schwach saurer Flotte erfolgen, wobei man in das Färbebad zweckmäßigerweise bei 40° bis 60 °C eingeht und dann bei Kochtemperatur färbt. Man kann auch unter Druck bei Temperaturen über 100 °C färben. Desweiteren lassen sich die Farbstoffe als Spinnlösungen zur Herstellung polyacrylnitrilhaltiger Fasern zusetzen oder auch auf die unverstreckte Faser aufbringen.

Die Färbungen der erfindungsgemäßen Farbstoffe der Formel I auf Materialien aus Polyacrylnitril

oder sauer modifizierten Polyesterfasern oder Polyamidfasern zeichnen sich durch sehr gute Licht-, Naß-, Reib- und Sublimierechtheit und durch eine hohe Affinität zur Faser aus.

Auch zeichnen sie sich teilweise aus durch ein gutes Migriervermögen und eine geringe Rhodanidempfindlichkeit.

Die Farbstoffe können einzeln oder in Mischungen angewendet werden. Sie sind gut zum Färben von Formkörpern aus Polymerisaten oder Mischpolymerisaten des Acrylnitrils, as. Dicyanethylens, sauer modifizierten aromatischen Polyestern oder sauer modifizierten synthetischen Superpolyamiden in Chlorkohlenwasserstoffen als Färbebad geeignet, wenn sie die Löslichkeit in Chlorkohlenwasserstoff förderne Substituenten, wie z. B. die tert.-Butylgruppe, tragen oder wenn das Anion $An^{(-)}$ in der Formel (I) das Anion einer einbasischen organische Säure mit 4-30 Kohlenstoffatomen ist.

Kationische Hydrazonfarbstoffe mit anderen heterocyclischen Resten, z. B. einem quaternierten Indolenin-, Chinoxalin-, Benzthiazol-, Benzimidazol- oder Pyrimidon(2)-Rest, und ihre Verwendung zum Färben von Polyacrylnitrilmaterialien waren bereits aus der DE-B-1 083 000 und FR-A-1 532 806 bekannt.

In den folgenden Beispielen bedeuten Teile Gewichtsteile.

Beispiel 1

16 Teile Pyrimidin-4-aldehyddimethylacetal werden mit 10 Teilen Phenylhydrazin in 100 Teilen 2 n Salzsäure 1 h auf 100° erhitzt. Nach dem Erkalten versetzt man mit 10 Teilen Natriumacetat, isoliert den kristallinen Niederschlag und wäscht gut mit Wasser, Das so hergestellte Phenylhydrazon des Pyrimidin-4-aldehyd wird in 100 Teilen Wasser verrührt, bei 20° mit 2 Teilen MgO und 30 Teilen Dimethylsulfat versetzt und während 15 Stunden gerührt. Dann erhitzt man 1 h auf 60-70°, klärt die Lösung über A-Kohle und salzt den Farbstoff durch Zugabe von Kochsalz und Zinkchlorid aus. Nach isolieren, waschen und trocknen erhält man 13 Teile eines Farbstoffes der Formel

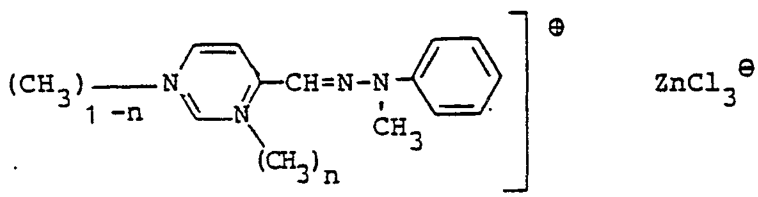

n = 0 oder 1,
$\lambda_{max}$ =426 nm (50%ige Essigsäure)

der Textilmaterialien aus Polyacrylnitril sowie andere mit kationischen Farbstoffe anfärbbare Textilmaterialien gelb mit hervorragenden Licht- und Naßechtheiten bei ausgezeichnetem Ziehverhalten und hoher Farbstärke sowie gutem Migriervermögen anfärbt.

Die Stellung der Methylgruppe im Pyrimidinring ist unbestimmt.

Analog lassen sich die in folgender Tabelle 1 aufgeführten Farbstoffe herstellen.

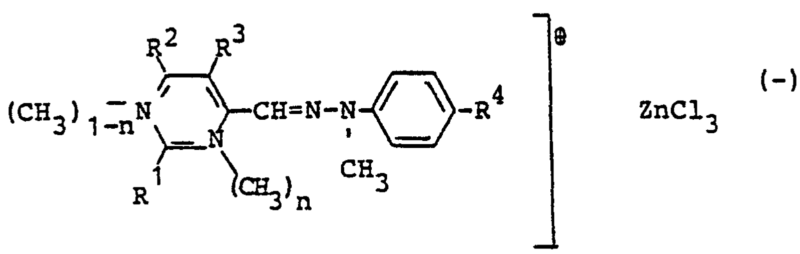

n = 0 oder 1.

Tabelle 1

| Bsp. | $R^1$ | $R^2$ | $R^3$ | $R^4$ | Farbton auf Polyacrylnitril |
|---|---|---|---|---|---|
| 2 | $CH_3$ | H | H | H | gelb |
| 3 | $CH_3$ | $CH_3$ | H | H | gelb |

(Fortsetzung)

| Bsp. | $R^1$ | $R^2$ | $R^3$ | $R^4$ | Farbton auf Polyacrylnitril |
|---|---|---|---|---|---|
| 4 | H | $CH_3$ | H | H | gelb |
| 5 | H | H | H | $CH_3$ | gelb |
| 6 | H | H | H | $OCH_3$ | orange |
| 7 | H | H | H | $OC_4H_9$ | orange |
| 8 | $CH_3$ | H | H | $OCH_3$ | orange |
| 9 | $CH_3$ | $CH_3$ | H | Cl | gelb |
| 10 | H | H | H | 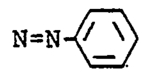 | rot |
| 11 | $C_6H_5$ | H | H | $OC_2H_5$ | orange |
| 12 | H | $C_6H_5$ | H | F | gelb |
| 13 | $C_6H_5$ | $C_2H_5$ | H | H | gelb |
| 14 | H | H | $CH_3$ | $CH_3$ | gelb |

Beispiel 15

16 Teile Pyrimidin-2-aldehyddimethylacetal werden wie in Beispiel 1 für das 4-Isomere beschrieben mit Phenylhydrazin umgesetzt und methyliert. Man erhält so 12 Teile eines Farbstoffes der Formel

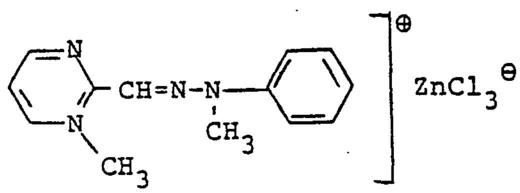

der Polyacrylnitrilfasern mit ähnlichen Echtheiten gelb färbt.

Analog lassen sich die in folgender Tabelle 2 aufgeführten Farbstoffe herstellen.

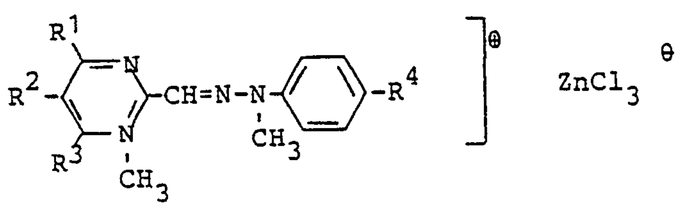

Tabelle 2

| Bsp. | $R^1$ | $R^2$ | $R^3$ | $R^4$ | Farbton auf Polyacrylnitril |
|---|---|---|---|---|---|
| 16 | H | H | H | $CH_3$ | gelb |
| 17 | H | H | H | $OCH_3$ | orange |

(Fortsetzung)

| Bsp. | $R^1$ | $R^2$ | $R^3$ | $R^4$ | Farbton auf Polyacrylnitril |
|---|---|---|---|---|---|
| 18 | $CH_3$ | H | $CH_3$ | F | gelb |
| 19 | $CH_3$ | H | $CH_3$ | N=N- 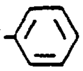 | rot |
| 20 | H | $C_6H_5$ | H | $OCH_3$ | orange |

Beispiel 21

28 Teile 6-Amino-4-H-1,3-benzodioxin werden wie üblich in wässriger Salzsäure mit 7 Teilen $NaNO_2$ diazotiert. Die Diazotierung wird eingerührt in eine eiskalte Lösung von 20 g Pyrimidyl-4-brenztraubensäureethylester. Nach Zugabe von Natriumacetatlösung wird über Nacht nachgerührt. Man isoliert den Niederschlag wäscht mit Wasser. Das Rohprodukt wird in 200 Teilen Wasser und 25 Teilen 50 %iger Natronlauge 3 h am Rückfluß gekocht.

Man läßt abkühlen, neutralisiert mit Salzsäure isoliert und wäscht den Niederschlag mit Wasser. Das feuchte Hydrazon wird in 100 Teilen Wasser suspendiert und mit 6 Teilen MgO und 30 Teilen Dimethylsulfat über Nacht verrührt. Dann wird 1 h bei 70° gerührt, die Lösung über A-Kohle geklärt und der Farbstoff durch Zugabe von Kochsalz und Zinkchlorid gefällt. Nach isolieren, waschen und trocknen erhält man 19,5 Teile eines Farbstoffes der Formel

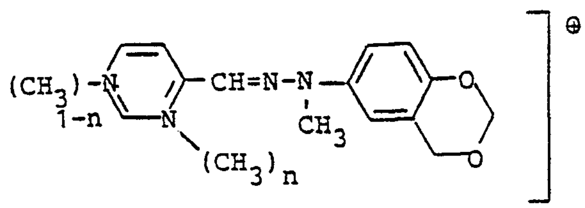

$ZnCl_3^{\ominus}$

$\lambda_{max}$ = 450 nm (50 %ige Essigsäure)
n = 0 oder 1

der Polyacrylnitril in gelbstichig orangen Farbtönen mit hervorragenden Echtheiten färbt.

In analoger Weise können die in Tabelle 1 beschriebenen Farbstoffe sowie die in folgender Tabelle 3 aufgeführten Farbstoffe hergestellt werden.

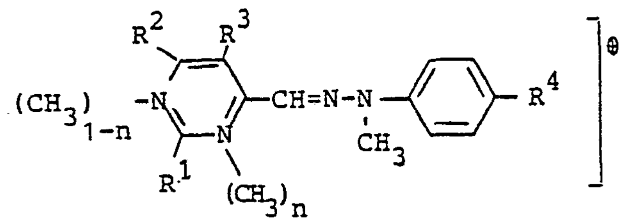

$ZnCl_3^{\ominus}$

n = 0 oder 1

Tabelle 3

| Bsp. | $R^1$ | $R^2$ | $R^3$ | $R^4$ | Farbton auf Polyacrylnitril |
|---|---|---|---|---|---|
| 22 | $CH_3$ | H | H | 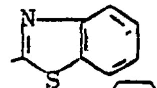 | gelb |
| 23 | $C_6H_5$ | H | H | N=N- 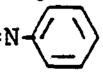 | rot |
| 24 | $CH_3$ | H | H | $OC_3H_7$ | orange |

Beispiel 25

17 Teile 4-Butoxyanilin werden wie üblich in wässriger Salzsäure diazotiert. Die Diazotierung wird bei 0-5° eingerührt in eine Lösung von 17 Teilen Pyrimidiyl-2-essigsäureethylester in 100 Teilen Dimethylformamid.

Nach Zugabe von Natriumacetat wird noch 5 h nachgerührt. Man isoliert und wäscht mit Wasser. Das Rohprodukt wird in 200 Teilen 10 %iger Natronlauge 3 h im Rückfluß gekocht. Nach Neutralisation mit Salzsäure wird der Niederschlag bei 20° isoliert und mit Wasser gewaschen. Das Rohprodukt wird analog Beispiel 21 in Wasser mit Dimethylsulfat/Magnesiumoxid alkyliert. Nach Aufarbeitung erhält man 23 Teile eines Farbstoffs der Formel

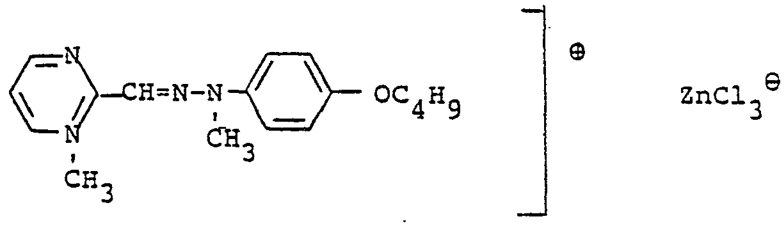

der Polyacrylnitrilfasern in orangen Tönen mit guten Echtheiten anfärbt.

Auf analogem Wege lassen sich die in Tabelle 2 und in Beispiel 15 beschriebenen Farbstoffe herstellen.

**Patentansprüche**

1. Kationische Hydrazonfarbstoffe der allgemeinen Formel

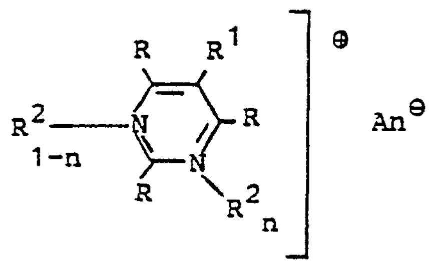

worin R H, Alkyl, Cycloalkyl, Aralkyl oder Aryl bedeutet und wobei ein Rest R einem Rest der Formel

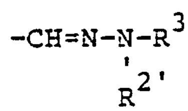

entspricht,

$R^1$ Alkyl, Cycloalkyl, Aryl, Aralkyl oder Halogen,

$R^{2'}$ und $R^2$ Alkyl, Alkenyl, Alkinyl oder Aralkyl,

$R^3$ einen substituierten oder ankondensierten Benzol- oder Naphthalinring bedeuten, dessen o-Stellung mit $R^{2'}$ ringgeschlossen sein kann,

n 0 oder 1 und

$An^{\ominus}$ ein Anion bedeuten, und worin

die cyclischen und acyclischen Reste nichtionogene Substituenten und/oder eine Carboxylgruppen enthalten können.

2. Kationische Hydrazonfarbstoffe gemäß Anspruch 1 der Formel

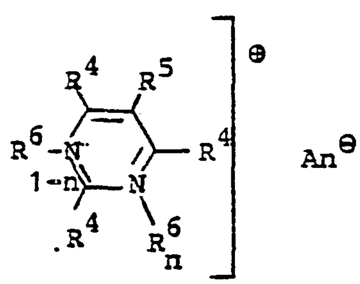

worin $R^4$ Wasserstoff, einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen $C_2$-$C_4$-Alkenylrest, einen gegebenenfalls durch $C_1$-$C_4$-Alkyl substituierten Cyclohexylrest, einen gegebenenfalls durch Halogen, $C_1$-$C_4$-Alkyl oder $C_1$-$C_4$-Alkoxy substituierten Phenyl-, Benzyl- oder Phenylethylrest bedeutet, und wobei ein $R^4$ einem Rest der Formel

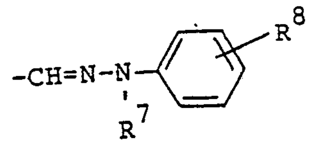

entsprich, worin

$R^5$ Wasserstoff, einen gegebenenfalls durch Hydroxy, Halogen, Cyan, $C_1$-$C_4$-Alkoxy, Carboxyl, Aminocarbonyl- oder $C_1$-$C_4$-Alkoxycarbonyl substituierten $C_1$-$C_8$-Alkylrest, einen $C_2$-$C_4$-Alkenylrest oder einen gegebenenfalls durch Halogen, $C_1$-$C_4$-Alkyl oder $C_1$-$C_4$-Alkoxy substituierten Benzyl-, Phenyl- oder Phenylethylrest, einen gegebenenfalls durch $C_1$-$C_4$-Alkyl substituierten Cyclohexylrest, Fluor, Chlor oder Brom,

$R^6$, $R^7$ einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen $C_2$-$C_4$-Alkenylrest oder einen gegebenenfalls durch Halogen, $C_1$-$C_4$-Alkyl oder $C_1$-$C_4$-Alkoxy substituierten Benzyl- oder Phenylethylrest,

$R^8$ Wasserstoff, $C_1$-$C_4$-Alkyl, $C_1$-$C_4$-Alkoxy, Halogen, Nitro, Cyan, $C_1$-$C_4$-Alkylsulfonyl, Phenylsulfonyl, Acetylamino, Phenylazo, Benzthiazolyl oder 1,2,4-Oxadiazolyl, wobei die genannten cyclischen Reste durch $C_1$-$C_4$-Alkyl oder Phenyl substituiert sein können, und $R^8$ zum Ring ankondensiert sein kann,

$R^7$ mit der o-Stellung des Benzolringes verbunden sein kann und dann gemeinsam mit dem Benzolring und dem Stickstoffatom einen gegebenenfalls durch $C_1$-$C_4$-Alkyl oder $C_1$-$C_4$-Alkoxy substituierten Dihydroindol-, Tetrahydrochinolin-, Tetrahydrochinoxalin-, Tetrahydro-1,4-benzoxazin- oder Tetrahydro-1,4-benzthiazinring bildet.

n 0 oder 1 und

$An^{(-)}$ ein Anion bedeuten.

3. Kationische Hydrazonfarbstoffe der Formel des Anspruchs 2, worin ein Rest $R^4$ einem Rest der Formel

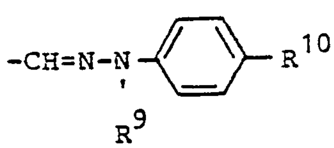

entspricht, worin

$R^9$ Alkyl mit 1-4 C-Atomen, 2-Cyanethyl, 2-Carbamoylethyl, 2-Hydroxyethyl oder Benzyl, und

$R^{10}$ H, Methyl, Ethyl, $C_1$-$C_4$-Alkoxy, Fluor, Chlor, Brom, Methylsulfonyl, Cyan, Nitro, 6-Methylbenzthiazolyl-2, Acetylamino, Phenylazo, bedeuten, oder

$R^{10}$ mit der o-Stellung des Phenylringes einen Benzdioxinring bildet.

4. Kationische Hydrazonfarbstoffe gemäß Anspruch 1 der Formel

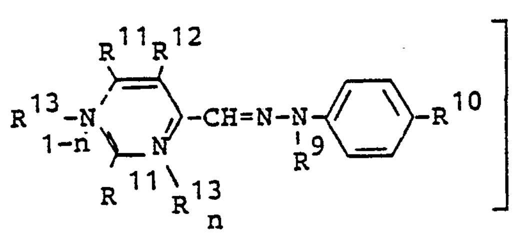

$An^{\ominus}$ (IV)

worin

$R^{11}$, $R^{12}$, H, $CH_3$, $C_2H_5$, $C_3H_7$, $C_4H_9$, $C_2H_4OH$, $CH_2$—$C_6H_5$ oder $C_6H_5$ und

$R^{12}$ zusätzlich Fluor, Chlor oder Brom,

$R^{13}$ $CH_3$, $C_2H_5$, $C_2H_4CN$, $C_2H_4OH$, $CH_2$—$CHOH$—$CH_3$ oder $CH_2$—$C_6H_5$ und

n 0 oder 1 bedeuten, und worin $R^9$ und $R^{10}$ die in Anspruch 3 angegebene Bedeutung haben.

5. Verfahren zur Herstellung von kationischen Hydrazonfarbstoffen gemäß Anspruch 1, dadurch gekennzeichnet, daß man Pyrimidin-4-aldehydhydrazone oder Pyrimidin-2-aldehydhydrazone der allgemeinen Formel

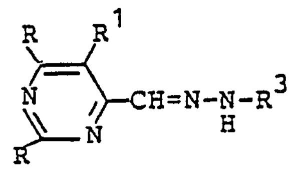

bzw.

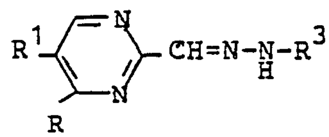

mit alkylierenden Mitteln der Formel

$R^2$—X

umsetzt.

6. Verfahren zur Herstellung von kationischen Hydrazonfarbstoffen gemäß Anspruch 1, dadurch gekennzeichnet, daß man die benötigten Pyrimidinaldehydhydrazone herstellt durch Kupplung von diazotierten aromatischen Aminen der formel

$R^3$—$NH_2$

auf Pyrimidinderivate der Formel

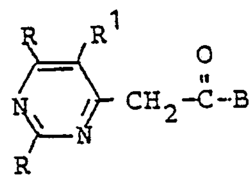

bzw.

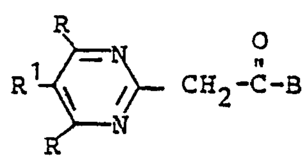

wobei B für —O-Alkyl, —O-Aryl, —CO—O-Alkyl oder —CO—O-Aryl steht, und die primären Kupplungsprodukte mit Säure oder Alkali behandelt.

7. Verfahren zum Färben und Bedrucken natürlicher und synthetischer Materialien, insbesondere von Fasern aus Polyacrylnitril und sauermodifizierten Polyestern und Polyamiden, dadurch gekennzeichnet, daß man Farbstoffe des Anspruchs 1 verwendet.

## Claims

1. Cationic hydrazone dyestuffs of the general formula

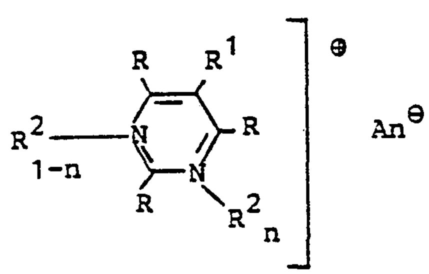

wherein R denotes H, alkyl, cycloalkyl, aralkyl or aryl and where one R radical corresponds to a radical of the formula

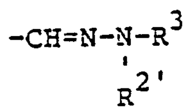

wherein

$R^1$ denotes alkyl, cycloalkyl, aryl, aralkyl or halogen,

$R^{2'}$ and $R^2$ denote alkyl, alkenyl, alkinyl or aralkyl and

$R^3$ denotes a substituted or fused-on benzene or naphthalene ring whose o-position can be ringclosed with $R^{2'}$,

n denotes 0 or 1 and

$An^{\ominus}$ denotes an anion and

the cyclic and acyclic radicals can contain non-ionic substituents and/or a carboxyl group.

2. Cationic hydrazone dyestuffs according to Claim 1 of the formula

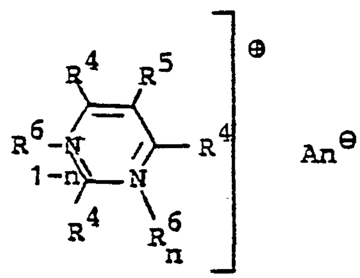

wherein $R^4$ denotes hydrogen, an optionally hydroxyl-, halogen-, cyano-, $C_1$-$C_4$-alkoxy-, carboxyl-, aminocarbonyl- or $C_1$-$C_4$-alkoxycarbonyl-substituted $C_1$-$C_8$-alkyl radical, a $C_2$-$C_4$-alkenyl radical, an optionally $C_1$-$C_4$-alkyl-substituted cyclohexyl radical or an optionally halogen-, $C_1$-$C_4$-alkyl- or $C_1$-$C_4$-alkoxy-substituted phenyl, benzyl or phenylethyl radical, and where one $R^4$ corresponds to a radical of the formula

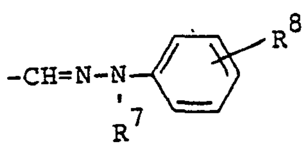

wherein

$R^5$ denotes hydrogen, an optionally hydroxyl-, halogen-, cyano-, $C_1$-$C_4$-alkoxy-, carboxyl-, aminocarbonyl- or $C_1$-$C_4$-alkoxycarbonyl-substituted $C_1$-$C_8$-alkyl radical, a $C_2$-$C_4$-alkenyl radical, an optionally halogen-, $C_1$-$C_4$-alkyl- or $C_1$-$C_4$-alkoxy-substituted benzyl, phenyl or phenylethyl radical, an optionally $C_1$-$C_4$-alkyl-substituted cyclohexyl radical or fluorine, chlorine or bromine,

$R^6$ and $R^7$ denote an optionally hydroxyl-, halogen-, cyano-, $C_1$-$C_4$-alkoxy-, carboxyl-, aminocarbonyl- or $C_1$-$C_4$-alkoxycarbonyl-substituted $C_1$-$C_8$-alkyl radical, a $C_2$-$C_4$-alkenyl radical or an optionally halogen-, $C_1$-$C_4$-alkyl- or $C_1$-$C_4$-alkoxy-substituted benzyl or phenylethyl radical,

$R^8$ denotes hydrogen, $C_1$-$C_4$-alkyl, $C_1$-$C_4$-alkoxy, halogen, nitro, cyano, $C_1$-$C_4$-alkylsulphonyl, phenylsulphonyl, acetylamino, phenylazo, benzothiazolyl or 1,2,4-oxadiazolyl, where the cyclic radicals mentioned can be substituted by $C_1$-$C_4$-alkyl or phenyl, and $R^8$ can be fused-on to form a ring,

$R^7$ can be bonded to the o-position of the benzene ring and can then, jointly with the benzene ring and the nitrogen atom, form an optionally $C_1$-$C_4$-alkyl- or $C_1$-$C_4$-alkoxy-substituted dihydroindole, tetrahydroquinoline, tetrahydroquinoxaline, tetrahydro-1,4-benzoxazine or tetrahydro-1,4-benzothiazine ring,

n denotes 0 or 1 and

$An^{(-)}$ denotes an anion.

3. Cationic hydrazone dyestuffs of the formula of Claim 2, wherein one $R^4$ radical corresponds to a radical of the formula

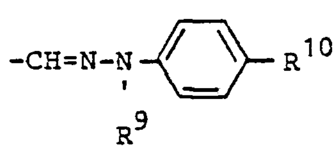

wherein

$R^9$ denotes alkyl having 1-4 C atoms, 2-cyanoethyl, 2-carbamoylethyl, 2-hydroxyethyl or benzyl,

$R^{10}$ denotes H, methyl, ethyl, $C_1$-$C_4$-alkoxy fluorine, chlorine, bromine, methylsulphonyl, cyano, nitro, 6-methylbenzothiazol-2-yl, acetylamino or phenylazo, or

$R^{10}$ forms a benzodioxine ring with the o-position of the phenyl ring.

4. Cationic hydrazone dyestuffs according to Claim 1 of the formula

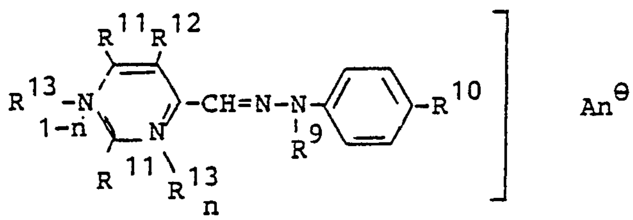

(IV)

wherein

$R^{11}$ and $R^{12}$ denote H, $CH_3$, $C_2H_5$, $C_3H_7$, $C_4H_9$, $C_2H_4OH$, $CH_2—C_6H_5$ or $C_6H_5$ and

$R^{12}$ additionally denotes fluorine, chlorine or bromine,

$R^{13}$ denotes $CH_3$, $C_2H_5$, $C_2H_4CN$, $C_2H_4OH$, $CH_2—CHOH—CH_3$ or $CH_2—C_6H_5$ and

n denotes 0 or 1 and wherein $R^9$ and $R^{10}$ have the meaning given in Claim 3.

5. Process for preparing cationic hydrazone dyestuffs according to Claim 1, characterised in that pyrimidine-4-aldehydehydrazones or pyrimidine-2-aldehydehydrazones of the general formula

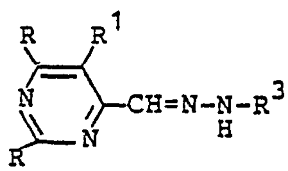

or

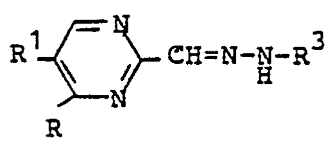

are reacted with alkylating agents of the formula

$$R^2—X.$$

6. Process for preparing cationic hydrazone dyestuffs according to Claim 1, characterised in that the pyrimidinealdehydrazones required are prepared by coupling diazotised aromatic amines of the formula

$$R^3—NH_2$$

onto pyrimidine derivatives of the formula

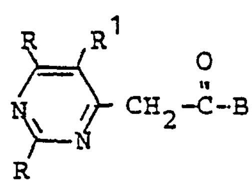

or

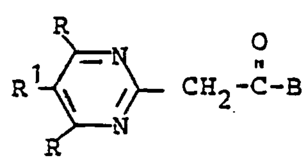

where B represents —O-alkyl, —O-aryl, —CO—O-alkyl or —CO-aryl, and the primary coupling products are treated with acid or alkali.

7. Process for dyeing and printing natural and synthetic materials, in particular fibres made of polyacrylonitrile and acid-modified polyesters and polyamides, characterised in that dyestuffs of Claim 1 are used.

**Revendications**

1. Colorants hydrazoniques cationiques de formule générale

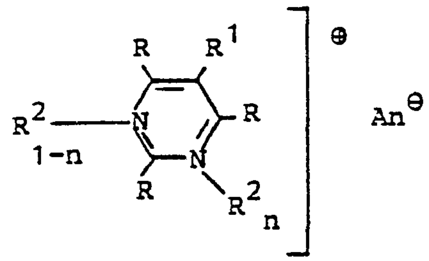

dans laquelle R représente H, un groupe alkyle, cycloalkyle, aralkyle ou aryle et un reste R correspond à un reste de formule

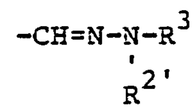

$R^1$ est un groupe alkyle, cycloalkyle, aryle, aralkyle ou un halogène,

$R^{2'}$ et $R^2$ sont un groupe alkyle, alcényle, alcynyle ou aralkyle,

$R^3$ est un noyau benzénique ou naphtalénique substitué ou condensé dont la position ortho peut être cyclisée avec $R^{2'}$

n a la valeur 0 ou 1 et

$An^{\ominus}$ désigne un anion, et

les restes cycliques et acycliques peuvent comporter des substituants non ionogènes et/ou un groupe carboxyle.

2. Colorants hydrazoniques cationiques suivant la revendication 1, de formule

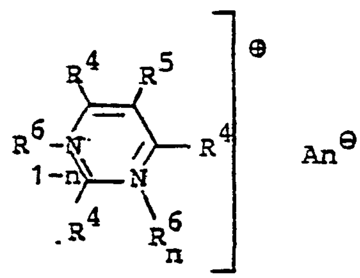

dans laquelle

$R^4$ représente l'hydrogène, un reste alkyle en $C_1$ à $C_8$ éventuellement substitué par un radical hydroxy, halogéno, cyano, alkoxy en $C_1$ à $C_4$, carboxyle, aminocarbonyle ou (alkoxy en $C_1$ à $C_4$)carbonyle, un reste alcényle en $C_2$ à $C_4$, un reste cyclohexyle éventuellement substitué par un radical alkyle en $C_1$ à $C_4$, un reste phényle, benzyle ou phényléthyle éventuellement substitué par un radical halogéno, alkyle en $C_1$ à $C_4$ ou alkoxy en $C_1$ à $C_4$, et un groupe $R^4$ représente un reste de formule

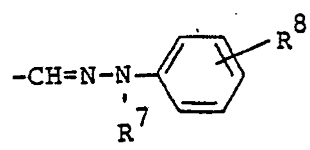

dans laquelle

$R^5$ représente l'hydrogène, un reste alkyle en $C_1$ à $C_8$ éventuellement substitué par un radical hydroxy, halogéno, cyano, alkoxy en $C_1$ à $C_4$, carboxyle, aminocarbonyle ou (alkoxy en $C_1$ à $C_4$)carbonyle, un reste alcényle en $C_2$ à $C_4$ ou un reste benzyle, phényle ou phényléthyle éventuellement substitué par un radical halogéno, alkyle en $C_1$ à $C_4$ ou alkoxy en $C_1$ à $C_4$, un reste cyclohexyle éventuellement substitué par un radical alkyle en $C_1$ à $C_4$, du fluor, du chlore ou du brome,

$R^6$, $R^7$ représentent un reste alkyle en $C_1$ à $C_8$ éventuellement substitué par un radical hydroxy, halogéno, cyano, alkoxy en $C_1$ à $C_4$, carboxyle, aminocarbonyle ou (alkoxy en $C_1$ à $C_4$)carbonyle, un reste alcényle en $C_2$ à $C_4$ ou un reste benzyle ou phényléthyle éventuellement substitué par un radical halogéno, alkyle en $C_1$ à $C_4$ ou alkoxy en $C_1$ à $C_4$,

$R^8$ représente l'hydrogène, un reste alkyle en $C_1$ à $C_4$, alkoxy en $C_1$ à $C_4$, un halogène, un reste nitro, cyano, alkylsulfonyle en $C_1$ à $C_4$, phénylsulfonyle, acétylamino, phénylazo, benzothiazolyle ou 1,2,4-oxdiazolyle, les restes cycliques mentionnés pouvant être substitués par des radicaux alkyle en $C_1$ à $C_4$ ou phényle et $R^8$ pouvant être condensé avec le noyau,

$R^7$ peut être lié à la position ortho du noyau benzénique et forme alors en commun avec le noyau benzénique et l'atome d'azote un noyau de dihydro-indole, de tétrahydroquinoléine, de tétrahydroquinoxaline, de tétrahydro-1,4-benzoxazine, ou de tétrahydro-1,4-benzothiazine éventuellement substitué par un reste alkyle en $C_1$ à $C_4$ ou alkoxy en $C_1$ à $C_4$,

n a la valeur 0 ou 1 et

$An^{(-)}$ représente un anion.

3. Colorants hydrazoniques cationiques de formule suivant la revendication 2, dans laquelle un reste $R^4$ correspond à la formule

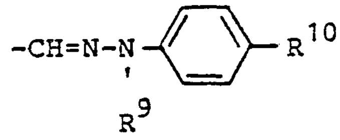

dans laquelle

$R^9$ est un groupe alkyle ayant 1 à 4 atomes de carbone, 2-cyanéthyle, 2-carbamoyléthyle, 2-hydroxyéthyle ou benzyle et

$R^{10}$ représente H, un groupe méthyle, éthyle, alkoxy en $C_1$ à $C_4$, le fluor, le chlore, le brome, un groupe méthylsulfonyle, cyano, nitro, 6-méthylbenzothiazolyle-2, acétylamino, phénylazo, ou bien

$R^{10}$ forme avec la position ortho du noyau phényle un noyau benzodioxine.

4. Colorants hydrazoniques cationiques suivant la revendication 1, de formule

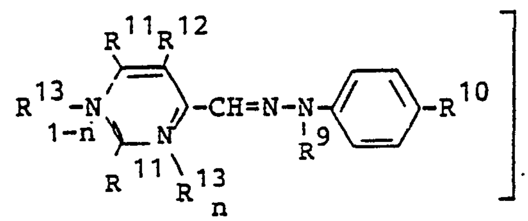

(IV)

dans laquelle

$R^{11}$, $R^{12}$ représentent H, $CH_3$, $C_2H_5$, $C_3H_7$, $C_4H_9$, $C_2H_4OH$, $CH_2—C_6H_5$ ou $C_6H_5$ et

$R^{12}$ représente en outre le fluor, le chlore ou le brome,

$R^{13}$ représente $CH_3$, $C_2H_5$, $C_2H_4CN$, $C_2H_4OH$, $CH_2—CHOH—CH_3$ ou $CH_2—C_6H_5$ et

n a la valeur 0 ou 1, et $R^9$ et $R^{10}$ ont la définition indiquée dans la revendication 3.

5. Procédé de production de colorants hydrazoniques cationiques suivant la revendication 1, caractérisé en ce qu'on fait réagir des pyrimidine-4-aldéhydhydrazones ou des pyrimidine-2-aldéhydhydrazones de formule générale

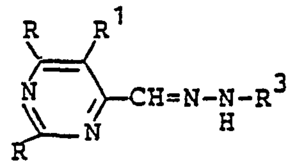

et respectivement

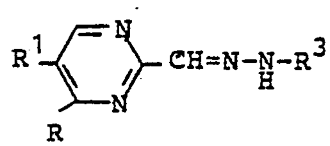

avec des agents alkylants de formule

$R^2—X$.

6. Procédé de production de colorants hydrazoniques cationiques suivant la revendication 1,

caractérisé en ce qu'on produit les pyrimidinaldéhyde-hydrazones nécessaires par copulation d'amines aromatiques diazotées de formule

$$R^3\text{—}NH_2$$

sur des dérivés de pyrimidines de formule

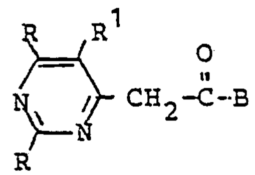

ou

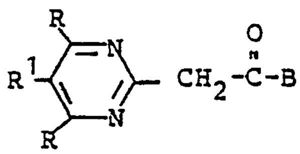

B étant un groupe —O-alkyle, —O-aryle, —CO—O-alkyle ou —CO—O-aryle, et on traite les produits de copulation primaires avec un acide ou un alcali.

7. Procédé de teinture et d'impression de matières naturelles et synthétiques, notamment de fibres de polyacrylonitrile et de polyesters et polyamides modifiés par un acide, caractérisé en ce qu'on utilise des colorants suivant la revendication 1.